# DEMANDE DE BREVET EUROPEEN

(11) **EP 2 383 240 A1**
(43) Date de publication de la demande: **02.11.2011**
(21) Numéro de dépôt: 11162680.0
(22) Date de dépôt: 15.04.2011
(51) Int. Cl.: C04B 35/19, G02B 1/02, G02B 7/18, G02B 7/183, C04B 35/117, C04B 35/488

(54) **Matériau composite céramique à base de beta-eucryptite et d'un oxyde et procédé de fabrication dudit matériau.**

(30) Priorité: 30.04.2010 FR 1001864
(71) Demandeur: Thales, 92200 Neuilly Sur Seine (FR); Centre National de la Recherche Scientifique, 75016 Paris (FR)
(72) Inventeur: Blanchard, Laurent, 06370, MOUANS-SARTOUX (FR); Fantozzi, Gilbert, 69330, MEYZIEU (FR); Pelletant, Aurélien, 69100, VILLEURBANNE (FR); Reveron, Helen, 69006, LYON (FR); Chevalier, Jérôme, 69140, RILLIEUX LA PAPE (FR)
(74) Mandataire: Esselin, Sophie

(57) **Abrégé**

Matériau composite présentant un coefficient de dilatation thermique inférieur à 1,3.10⁻⁶ K⁻¹, caractérisé en ce que le matériau composite est une céramique frittée à base d'un oxyde et des cristaux de β-eucryptite présentant un taux de *β*-eucryptite inférieure à 55% en masse (69% en volume)

## Description

Le domaine de l'invention est celui des matériaux convenant à la réalisation d'éléments optiques pour les applications spatiales, tels que les miroirs, et à la réalisation des structures optiques (aussi appelées éléments structuraux) dont la fonction est d'assurer le positionnement et le support des éléments optiques.

La tendance générale dans l'observation spatiale est à l'augmentation du diamètre des miroirs tant pour les futures missions scientifiques d'observation de l'univers que pour l'observation de la Terre depuis l'orbite géostationnaire, par exemple. Ainsi, dans un avenir proche, nous allons avoir besoin de matériaux extrêmement stables, autorisant de forts allègements tout en étant rigides et résistants et qui permettront la réalisation de miroirs de diamètre supérieur à 2 m avec des masses surfaciques inférieures à 25 kg.m⁻². Pour obtenir des miroirs stables du point de vue dimensionnel, on cherche des matériaux possédant un très faible coefficient de dilatation thermique CTE (en référence à l'expression anglo-saxonne "coefficient of thermal expansion") aux alentours de la température ambiante et/ou en dessous de celle-ci pour les applications cryogéniques (observation infrarouge, par exemple).

Les structures optiques telles que les structures de télescopes sont elles aussi soumises à de très fortes exigences en termes de stabilité dimensionnelle pour pouvoir garantir la qualité image. De plus, leurs dimensions croissantes requièrent des matériaux autorisant de forts allègements tout en étant rigides et résistants.

Pour ces applications, on connaît des matériaux présentant une bonne stabilité dimensionnelle, c'est-à-dire un coefficient de dilatation thermique positif et inférieur à 1,3 10⁻⁶ K⁻¹. Par exemple, il existe un matériau appelé Zerodur correspondant à une marque déposée. Le Zerodur est une vitrocéramique très utilisée pour la réalisation de miroirs terrestres et spatiaux. Il possède un très bas coefficient de dilatation à l'ambiante (2.10⁻⁸ K⁻¹), d'excellentes propriétés optiques et une faible densité (d=2,54). Toutefois, ses propriétés mécaniques modestes limitent fortement ses capacités d'allègement. Les masses surfaciques minimales des miroirs réalisés en Zérodur© sont de l'ordre de 35-40 kg.m⁻². Il est peu réaliste d'envisager son emploi pour des diamètres de miroirs spatiaux supérieurs à 1,5 m.

Le but de la présente invention est de proposer un matériau présentant une stabilité dimensionnelle compatible avec les applications spatiales ainsi que de bonnes propriétés mécaniques permettant de réaliser des éléments et des structures optiques de grande taille.

Un autre but de l'invention est de proposer un matériau de ce type pouvant être obtenu à partir d'un procédé de fabrication simple.

A cet effet, l'invention a pour objet un matériau composite présentant un coefficient de dilatation thermique inférieur à 1,3.10⁻⁶ K⁻¹, ledit matériau composite étant une céramique frittée à base d'un oxyde et des cristaux de β-eucryptite dont la quantité de *β*-eucryptite est inférieure à environ 55% en masse (environ 70 % en volume), l'oxyde étant apte à être fritté à une température inférieure à la température de fusion de la β-eucryptite et présentant un module d'Young supérieur à 100GPa ainsi qu'une contrainte à la rupture mesurée en flexion supérieure à 100 MPa.

Avantageusement, la *β*-eucryptite présente une taille de grains supérieure à environ 6µm.

Avantageusement, les grains de *β*-eucryptite sont microfissurés.

Dans un premier mode de réalisation, l'oxyde est de l'alumine.

Avantageusement, l'oxyde est issu du frittage de cristaux d'alumine de taille nanométrique.

Dans un deuxième mode de réalisation, l'oxyde est de la zircone.

Avantageusement, la zircone est dopée avec un élément tétravalent, par exemple l'oxyde de cérium.

L'invention a également pour objet un élément optique destiné aux applications spatiales, réalisé dans un matériau selon l'invention.

L'invention a également pour objet un élément structural destiné à assurer le positionnement et le support d'au moins un élément optique destiné aux applications spatiales, l'élément structural étant réalisé dans un matériau selon l'invention.

L'invention a aussi pour objet un dispositif optique comprenant un élément optique et l'élément structural réalisés dans un matériau selon l'invention.

Avantageusement, le dispositif optique comprend un élément optique et l'élément structural réalisés dans le même matériau.

L'invention a également pour objet un procédé de fabrication d'un matériau selon l'invention, comprenant une étape de réalisation d'un premier mélange d'une poudre d'oxyde sous forme cristalline et d'une poudre de β-eucryptite sous forme cristalline, ainsi qu'une étape de traitement thermique, d'un composite d'oxyde et de β-eucryptite obtenu à partir du premier mélange, pour fritter l'oxyde.

Avantageusement, l'étape de traitement thermique consiste à porter le composite d'oxyde et de β-eucryptite à une température de frittage inférieure à la température de fusion de la β-eucryptite dans les conditions du traitement thermique.

Avantageusement, le procédé comprend une étape de fabrication de la poudre de β-eucryptite comprenant :
- une étape de réalisation d'un mélange de poudres de carbonate de lithium, d'alumine et de silice dans des proportions adaptées pour obtenir de la β-eucryptite,
- une étape de calcination, d'une poudre issue du mélange, pour obtenir la β-eucryptite ;
- une étape de traitement thermique pour induire une croissance et une fissuration des grains de β-eucryptite.

Avantageusement, l'étape de calcination comprend une étape de montée en température jusqu'à une température maximale suivie d'une étape de diminution de la température débutant dés que la température à atteint la température maximale.

En utilisant un matériau composite à base d'un oxyde (présentant un coefficient de dilatation thermique positif) apte à être fritté à une température inférieure à la température de fusion de la β-eucryptite, on obtient aisément un matériau composite présentant une stabilité dimensionnelle compatible avec les applications spatiales. Il suffit de réaliser un mélange de particules de l'oxyde et de β-eucryptite et de porter le mélange à une température permettant le frittage de l'oxyde. Par ailleurs, en choisissant un oxyde présentant un module de Young important et une contrainte à la rupture importante, on obtient un matériau présentant des propriétés mécaniques appropriées pour les applications optiques dans le domaine du spatial et plus particulièrement pour réaliser des éléments optiques d'un diamètre supérieur à 2m et les structures optiques appropriées.

Le matériau selon l'invention est un matériau composite présentant un coefficient de dilatation thermique inférieur à 1,3.10⁻⁶ K⁻¹. Le matériau selon l'invention est un matériau composite céramique fritté à base d'un oxyde et de particules cristallines de β-eucryptite. La β-eucryptite est un aluminosilicate de lithium ou Lithium Alumino-Silicate défini couramment par l'acronyme LAS, dont la composition est la suivante : (Li₂O)ₓ (Al₂O₃)_{y} (SiO₂)_{z} où x, y et z sont les fractions molaires respectives d'oxyde de lithium Li₂O, d'alumine Al₂O₃ et de silice SiO₂. Les fractions molaires respectives de la β-eucryptite sont les suivantes : x=1, y=1 et z=2.

La β-eucryptite sous forme cristalline présente la particularité de posséder un coefficient de dilatation thermique faiblement négatif de l'ordre de -0.4x10⁻⁶K⁻¹, c'est-à-dire qu'elle se contracte sous l'effet d'une élévation de température. Le coefficient de dilatation thermique de la β-eucryptite sous forme cristalline varie selon la taille des grains la constituant. La variation du coefficient de dilatation thermique provient de la fissuration des grains de *β-*eucryptite. On peut par exemple obtenir un coefficient de dilatation thermique de -6.1x10⁻⁶K⁻¹ pour une taille de grains de l'ordre de 7µm et un coefficient de dilatation thermique de -10.9x10⁻⁶K⁻¹ pour une taille de grains de l'ordre de 13µm (K correspondant au Kelvin). La β-eucryptite sous forme amorphe présente un coefficient de dilatation thermique plus élevé que sous forme cristalline et doit être évitée. Un matériau comportant de la β-eucryptite sous forme cristalline dans une matrice d'oxyde fritté (dont le coefficient de dilatation thermique est positif) présente un coefficient de dilatation thermique plus faible que celui d'une matrice d'oxyde fritté.

On choisit un oxyde apte à être fritté à une température inférieure à la température de fusion de la β-eucryptite, et présentant de bonnes propriétés mécaniques à lui seul.

Le fait de choisir un oxyde apte à être fritté à une température inférieure à la température de fusion de la β-eucryptite permet d'obtenir un matériau présentant une stabilité dimensionnelle convenant aux applications optiques dans le domaine spatial au moyen d'un procédé de fabrication très simple. Un matériau présentant une stabilité dimensionnelle convenant aux applications optiques dans le domaine spatial est un matériau présentant un coefficient de dilatation thermique inférieur à 1,3.10⁻⁶ K⁻¹.

On utilise avantageusement le procédé de fabrication ci-dessous.

On réalise un premier mélange d'une poudre de β-eucryptite sous forme cristalline et d'une poudre d'oxyde sous forme cristalline (comprenant les caractéristiques listées précédemment).

Les proportions et les tailles de grains relatives de β-eucryptite et d'oxyde sont ajustées en fonction du coefficient de dilatation thermique que l'on souhaite affecter au matériau final. Elles sont choisies de sorte que le coefficient de dilatation thermique du matériau final est inférieur à 1,3.10⁻⁶K⁻¹. Plus on souhaite que le coefficient de dilatation thermique soit faible, plus la proportion de β-eucryptite est importante. De même, plus on souhaite que le coefficient de dilatation thermique soit faible, plus la taille des grains de β-eucryptite est importante. Si l'on souhaite utiliser le matériau en tant qu'élément optique, les proportions relatives sont de préférences choisies de sorte que le coefficient de dilatation thermique du matériau final est inférieur à 1,3.10⁻⁶K⁻¹ et, avantageusement le plus proche possible de zéro.

Si l'on souhaite utiliser le matériau en tant qu'élément structural, les proportions relatives sont, de préférence, choisies de sorte à maximiser les propriétés mécaniques tout en maintenant le coefficient de dilatation thermique inférieur à 1,3.10⁻⁶K⁻¹.

Le matériau obtenu permet de réaliser un dispositif optique, par exemple un télescope, comprenant au moins une structure optique et au moins un élément optique supporté par la structure optique, réalisés dans des matériaux identiques. Cela permet d'obtenir un dispositif optique athermique, c'est-à-dire dont tous éléments se déforment de manière similaire sous l'effet de la température.

Si l'on souhaite utiliser le matériau, aussi bien en tant qu'élément structural (ou substrat) qu'en tant qu'élément optique, au sein d'une d'un même dispositif, on ajuste avantageusement le coefficient de dilatation thermique de tous les éléments à une même valeur unique inférieure à 1,3.10⁻⁶K⁻¹.

L'étape de mélange de l'oxyde et de la *β*-eucryptite est, par exemple, une étape de dispersion, par exemple, au tourne-jarre. La barbotine ainsi obtenue est ensuite moulée. Il est ainsi possible de réaliser des formes diverses telles que des tubes ou de simples plaques en choisissant une forme de moule adapté.

Le composite obtenu est séché. Le séchage est, par exemple, réalisé à l'étuve. L'étape de séchage est avantageusement réalisée après le démoulage de la pièce.

En variante, la barbotine obtenue lors de l'étape de dispersion est séchée (par exemple, par atomisation et granulation, ajout de liants et plastifiants) puis pressée par une méthode de pressage à froid ou à chaud.

En variante, le mélange n'est pas réalisé en solution mais en voie sèche, par exemple au tourne jarre, puis pressé par une méthode de pressage à froid ou à chaud .

A ce stade, la pièce obtenue par coulage ou pressage à froid peut être usinée afin de lui conférer une géométrie complexe. Il est, par exemple, possible de pratiquer des évidements au sein du cru pour alléger la pièce.

On réalise ensuite le frittage du composite en réalisant un traitement thermique. Le traitement thermique consiste à porter le composite d'oxyde et de β-eucryptite à une température de frittage, éventuellement avec l'assistance d'une pression gazeuse ou mécanique. La montée en température peut aussi être réalisée par chauffage radiatif ou courant pulsé ou micro-ondes. La température de frittage est choisie pour permettre le frittage de l'oxyde mais pas la fusion de la β-eucryptite. Autrement dit, la température de frittage est inférieure à la température de fusion de la β-eucryptite dans les conditions opératoires choisies (en termes de pression, vitesse de montée en température, courant, temps de maintien à la température de frittage). Les conditions de frittage dépendent de l'oxyde choisi. A titre d'exemple, la température de fusion de la β-eucryptite est de l'ordre 1340°C dans les conditions de frittage naturelles. La température de frittage est, par exemple, inférieure à 1340°C.

La réalisation de très grandes pièces est possible puisque l'on peut utiliser une technique de coulage ou de pressage suivie d'un frittage naturel.

Le frittage de l'oxyde est suivi d'une étape de refroidissement du composite obtenu. La pièce obtenue peut être usinée, rectifiée et, dans le cas d'un miroir, être polie.

Le composite obtenu à l'issue de ce procédé forme une pièce qui peut être un élément optique, par exemple un miroir, ou une structure optique, par exemple une structure de télescope, apte à supporter un élément optique. La nature de la pièce obtenue dépend de la forme du moule utilisé, des éventuels allégement réalisés, des éventuels usinages et polissages réalisés ainsi que des proportions relatives des poudres d'oxyde et de β-eucryptite dans le premier mélange.

Le composite obtenu est un composite céramique fritté à base d'oxyde et de β-eucryptite. En effet, la température de frittage est inférieure à la température de fusion de la β-eucryptite. On s'assure ainsi que la β-eucryptite reste sous forme cristalline pendant le frittage de l'oxyde ce qui permet d'obtenir un coefficient de dilatation inférieur à 1,3.10⁻⁶ K⁻¹.

On obtient des matériaux ayant un coefficient de dilatation thermique convenant aux applications spatiales avec une quantité minimale de β-eucryptite. Par ailleurs, il n'est pas nécessaire de prévoir une étape de traitement thermique postérieure au frittage pour cristalliser la β-eucryptite.

En choisissant un oxyde présentant de bonnes propriétés mécaniques (module d'Young supérieur à 100 GPa et, de préférence, supérieur à 200 GPa ainsi qu'une contrainte à la rupture mesurée en flexion supérieure à 100 MPa et, de préférence, supérieure à 500 MPa) on obtient un matériau présentant des propriétés mécaniques convenant aux applications spatiales c'est-à-dire présentant un module d' Young supérieur à 100GPa ainsi qu'une contrainte à la rupture supérieure à 100 MPa. Les propriétés mécaniques et la stabilité dimensionnelle e la β-eucryptite sont particulièrement intéressantes pour les applications recherchées. Les éléments optiques dont le coefficient de dilatation thermique doit être proche de 0 doivent être réalisés à base d'un matériau présentant une proportion de β-eucryptite plus importante que pour réaliser des éléments structuraux. En effet, le coefficient d'expansion thermique peut être plus élevé que celui des éléments optiques. Par contre, les contraintes sur les propriétés mécaniques sont plus importantes pour les éléments structuraux. Or, le simple fait d'ajouter moins de β-eucryptite dans la matrice d'oxyde améliore ses propriétés mécaniques.

Par ailleurs, les oxydes se frittent facilement. A l'issue du frittage, on obtient donc un matériau composite complètement dense. Or, la densité est un élément essentiel pour obtenir de bonnes propriétés mécaniques. De plus, l'obtention d'une densité complète autorise le polissage direct de la pièce. On évite ainsi l'ajout d'une couche additionnelle telle que celle en SiC CVD classiquement déposée sur les substrats de miroir en SiC.

On va maintenant décrire deux exemples d'oxydes pouvant être utilisés dans le cadre de notre invention. Il s'agit d'une part d'une alumine (Al₂O₃) et, d'autre part, d'une zircone dopée avec un oxyde d'au moins un élément tétravalent. L'oxyde d'élément tétravalent est, par exemple, un oxyde de cérium (Ce-TZP aussi appelée zircone cériée ou encore Ce-ZrO₂). Des zircones présentant une proportion molaire d'oxyde de cérium inférieure ou égale à 20% peuvent être utilisées. Ces matériaux sont choisis pour les raisons qui sont exposées dans la demande.

Le frittage naturel de l'alumine et de la zircone cériée est envisageable à une température inférieure à celle du point de fusion de la β-eucryptite (de l'ordre de 1340°C dans les conditions de frittage naturel). On utilise avantageusement de la poudre dans laquelle les particules d'alumine sont de taille nanométrique car la température de fusion de l'alumine est plus basse à cette taille. On peut généralement utiliser des particules d'alumine de taille inférieure 1 µm. On utilise avantageusement de la poudre de β-eucryptite dans laquelle les particules cristallines de β-eucryptite sont de taille supérieures à 6 µm.

Par ailleurs, l'alumine et les zircones dopées avec un oxyde d'élément tétravalent présentent des coefficients thermiques d'expansion peu élevés ce qui permet d'obtenir des composites présentant des coefficients thermiques d'expansion du composite inférieurs à 1.3.10⁻⁶K⁻¹. Le coefficient de dilatation thermique de l'alumine à la température ambiante est de l'ordre de 8.10⁻⁶.K⁻¹. Le coefficient de dilatation thermique de la zircone cériée 16-Ce-TZP est de l'ordre de 11.10⁻⁶ K⁻¹. La zircone 16-Ce-TZP est de la zircone cériée présentant une proportion molaire d'oxyde de cérium égale à 16%.

L'alumine et les zircones dopées avec un oxyde d'élément tétravalent possèdent de bonnes propriétés mécaniques.

L'alumine présente un module d'Young de l'ordre de 400 GPa et une contrainte à la rupture mesurée en flexion de l'ordre de 400 MPa. L'alumine présente en outre une ténacité de l'ordre de 4 MPa. m^{1/2}. La ténacité est une évaluation de l'aptitude d'un matériau à consommer de l'énergie lorsqu'il est soumis à la fissuration ce qui correspond à la capacité à ne pas propager une fissure affectant le matériau. On peut obtenir un composite céramique d'alumine et de β-eucryptite présentant un coefficient de dilatation thermique nul présentant un module d'Young de l'ordre de 100 GPa avec une tenue moyenne (ou contrainte à la rupture) d'environ 100 MPa.

La 16Ce-TZP, présentent un module d'Young de l'ordre de 215 GPa et une contrainte à la rupture mesurée en flexion de l'ordre de 600 MPa. La zircone 16 Ce-TZP présente en outre une ténacité relativement élevée pouvant atteindre 11 MPa. m^{1/2}.

En outre, les poudres d'alumine et de zircone cériée sont disponibles commercialement.

En comparaison, par exemple, aux zircones dopées par l'yttrium, les zircones dopée aux oxydes d'éléments tétravalents et plus particulièrement à l'oxyde de cérium présentent l'avantage de ne pas se dégrader en présence d'humidité. Cela favorise la stabilité dimensionnelle du matériau et donc des présent composites.

Parmi les oxydes d'au moins un élément tétravalent que l'on peut également utiliser on peut citer l'oxyde de titane ou l'oxyde de titane et de cérium.

On va maintenant décrire les étapes d'un exemple de procédé de synthèse de la β-eucryptite. La β-eucryptite peut bien sûr être obtenue par tout autre procédé permettant de synthétiser de la β-eucryptite de taille micrométrique ou nanométrique.

On réalise un mélange de poudres de carbonate de lithium Li₂CO₃, d'alumine Al₂O₃ et de silice SiO₂ dans des proportions adaptées pour obtenir la β-eucryptite. A cet effet, on mélange les poudres de carbonate de lithium, d'alumine et de silice avec des proportions massiques respectives de ces éléments sont égales à 24,96%, 34,45%, 40,59%.

Le mélange obtenu est mis en solution aqueuse, par exemple, à raison de 50% en masse du mélange. On introduit éventuellement un dispersant dans la solution, par exemple, du Darvan C.

On réalise, par exemple, une solution dont 50% de la masse est issue du mélange précédemment obtenu et 0,15% de la masse correspond à un dispersant. La solution est ensuite dispersée. La dispersion est, par exemple, réalisée au moyen d'un tourne-jarre avec des billes de zircone durant 24 h.

La barbotine obtenue est ensuite séchée. Le séchage est, par exemple, réalisé en étuve à 110°C. Cette opération est poursuivie jusqu'à ce que la perte de masse soit nulle.

Le procédé comprend ensuite une étape de calcination de la poudre séchée. La fonction de l'étape de calcination est de créer les conditions pour obtenir une réaction à l'état solide entre les poudres de carbonate de lithium Li₂CO₃, d'alumine Al₂O₃ et de silice SiO₂ de sorte à obtenir la β-eucryptite. Avantageusement, l'étape de calcination comprend une étape de montée en température jusqu'à une température maximale Tmax puis une étape de diminution de la température débutant dés que la température maximale est atteinte. Autrement dit, on reste à la température maximale pendant un temps nul. La demanderesse a en effet constaté que ce procédé permet d'éviter la densification ou le frittage de la β-eucryptite obtenu ce qui n'est pas le cas lorsque la poudre est maintenue à la température maximale pendant une durée non nulle. On évite la densification des grains de β-eucryptite afin de faciliter le broyage de la poudre obtenue. La calcination peut en variante, être réalisée avec un maintient à la température maximale pendant une durée non nulle. Cela est avantageux lorsqu'on souhaite utiliser une β-eucryptite de plus grande taille. La poudre séchée est, par exemple, calcinée dans un four selon le protocole suivant: montée à 1050°C à raison de 5°C.min⁻¹ puis dès la température atteinte, refroidissement à raison de 5ºC.min⁻¹ jusqu'à 200°C et refroidissement naturel.

La poudre calcinée est ensuite broyée (en solution aqueuse ou par voie sèche) pour obtenir des particules de taille nanométrique ou micrométrique. Le broyage est, par exemple, réalisé par attrition ou au tourne jarre.

On réalise par exemple une solution aqueuse présentant 40% en masse de matière sèche. La solution aqueuse est ensuite broyée par un attriteur durant 6 h à 500 tours.min⁻¹.

La solution est ensuite séchée.

Le séchage est, par exemple, réalisé au moyen d'un évaporateur rotatif à 70°C sous une pression de 300mbar. En variante, la barbotine issue du broyage par attrition est coulée.

On réalise par la suite une solution aqueuse présentant 40% en masse de matière sèche. La solution aqueuse est ensuite dispersée au moyen d'un tourne-jarre avec des billes de zircone durant 24 h.

La barbotine obtenue est ensuite coulée. Les crus ainsi obtenus sont séchés, par exemple, en étuve à 50°C. Cette opération est poursuivie jusqu'à ce que la perte de masse soit nulle.

Les crus séchés sont ensuite traitée thermiquement à 1300°C durant une durée non nulle. Ainsi on obtient, par exemple, des grains de *β-*eucryptite avec une taille de grains de 7µm après un traitement à 1300°C durant 6h. De plus, ces grains présentent une microfissuration. En variante, la poudre issue de la calcination est broyée sans attrition est traité thermiquement à 1300°C durant une durée non nulle.

Les céramiques de *β*-eucryptite traitées thermiquement ainsi obtenues sont finalement broyées et tamisées.

On peut par exemple obtenir des agrégats de *β*-eucryptite présentant une taille entre 7µm et 2µm constitué de grains de 7µm pour un traitement thermique à 1300°C pendant 6h.

## Revendications

1. Matériau composite présentant un coefficient de dilatation thermique inférieur à 1,3.10⁻⁶ K⁻¹, **caractérisé en ce que** le matériau composite est une céramique frittée à base d'un oxyde et de cristaux de β-eucryptite et présente un taux de *β*-eucryptite inférieur à environ 55% en masse

2. Matériau composite dont la taille des grains de *β*-eucryptite est supérieure à environ 6µm.

3. Matériau composite dont les grains de *β*-eucryptite sont microfissurés

4. Matériau composite selon la revendication 1 , dans lequel l'oxyde est de l'alumine.

5. Matériau composite selon la revendication précédente, dans lequel l'oxyde est issu du frittage de cristaux d'alumine de taille nanométrique.

6. Matériau composite selon la revendication 1, dans lequel l'oxyde est de la zircone.

7. Matériau composite selon la revendication 6, dans lequel l'oxyde est de la zircone dopée avec un oxyde d'au moins un élément tétravalent.

8. Matériau composite selon la revendication 7, dans lequel la zircone est dopée avec un oxyde de cérium.

9. Elément optique destiné aux applications spatiales, ledit élément étant réalisé dans un matériau selon l'une quelconque des revendications précédentes.

10. Elément structural destiné à assurer le positionnement et le support d'au moins un élément optique destiné aux applications spatiales, l'élément structural étant réalisé dans un matériau selon l'une quelconque des revendications 1 à 8.

11. Dispositif optique comprenant un élément optique selon la revendication 9 et un élément structural selon la revendication 10.

12. Dispositif optique selon la revendication précédente, dans lequel ledit élément optique et l'élément structural sont réalisés dans le même matériau.

13. Procédé de fabrication d'un matériau selon l'une quelconque des revendications 1 à 8, comprenant une étape de réalisation d'un premier mélange d'une poudre d'oxyde sous forme cristalline et d'une poudre de β-eucryptite sous forme cristalline, ainsi qu'une étape de traitement thermique, d'un composite d'oxyde et de β-eucryptite obtenu à partir du premier mélange, pour fritter l'oxyde.

14. Procédé de fabrication selon la revendication précédente, dans lequel le traitement thermique consiste à porter le composite d'oxyde et de β-eucryptite à une température de frittage inférieure à la température de fusion de la β-eucryptite dans les conditions du traitement thermique.

15. Procédé de fabrication selon l'une quelconque des revendications 13 à 14, comprenant une étape de fabrication de la poudre de β-eucryptite, ladite étape de fabrication de la poudre de β-eucryptite comprenant :
- une étape de réalisation d'un mélange de poudres de carbonate de lithium, d'alumine et de silice dans des proportions adaptées pour obtenir de la β-eucryptite,
- une étape de calcination, d'une poudre issue du mélange, pour obtenir la β-eucryptite ;une étape de traitement thermique pour induire unecroissance et une fissuration des grains de β-eucryptite

16. Procédé de fabrication selon la revendication précédente, dans laquelle l'étape de calcination comprend une étape de montée en température jusqu'à une température maximale suivie d'une étape de diminution de la température débutant dés que la température à atteint la température maximale.
